# EUROPEAN PATENT SPECIFICATION

(11) **EP 0 490 313 B1**
(45) Date of publication and mention of the grant of the patent: **10.05.1995**
(21) Application number: 91121075.5
(22) Date of filing: 09.12.1991
(51) Int. Cl.: B60N 2/06

(54) **Spacer yoke between a fixed slide rail and a movable slide rail for use in a motorcar seat**
Abstandsteil zwischen einer festen und einer bewegbaren Schiene zur Verwendung in einem Kraftfahrzeugsitz
Pièce d'écartement entre une glissière fixe et une glissière mobile à utiliser pour un siège véhicule automobile

(30) Priority: 14.12.1990 IT 5342990 U
(43) Date of publication of application: 17.06.1992
(73) Proprietor: ELCAT S.p.A., I-10090 Rivoli (TO) (IT)
(72) Inventor: Brandoli, Luigi, I-10098 Rivoli (Torino) (IT)
(74) Representative: Lotti, Giorgio

(56) References cited:
- DE-A- 3 323 431
- FR-A- 2 606 339
- GB-A- 1 065 862
- GB-A- 2 113 538
- GB-A- 2 191 686

## Description

This invention relates to an elastic spacer yoke between a fixed slide rail and movable slide rail for use in a motorcar seat.

At present, motorcar seats are provided with devices for translating the seat forwardly and backwardly. Such devices are formed by a pair of slide rails that are fixed to the floor of the car and that slidably support a pair of movable slides which carry the seat.

Some well known kinds of slide rails have longitudinal edges variously folded so as to couple longitudinally and slide reciprocally.

Particularly, the edges of the movable slide rails are folded over the edges of the fixed ones to prevent the seat from being lifted up and detached from its own support especially when the safety belts are fastened. The movable slide rails usually bear and slide on the upper edges of the fixed slide rails via revolving means such as rollers or balls that facilitate the movements. But it is necessary to impede direct contact between the slide rails in any of their parts, that is between the various edges.

In adjusting the position of the seat, the seat can be temporarily unloaded of the passenger's weight and might be pulled roughly, causing some edges of the movable slide rail to crash against the edges of the fixed guides. Therefore there is a risk of the adjusting device remaining stuck due to insufficient play and also a risk of noise during the movement.

GB-A-2 191 686 shows a slide rail according to the preamble of claim 1. A spacer of elastic material is provided between the fixed and the movable slide rails. The spacer consists of a body with an elongated shape and a number of projections on top and bottom surfaces, with slits behind the projections to permit absorption of movements in the clearance between the rails.

The object of the present invention is to provide a device that prevents the slides from coming in contact, so as to avoid the above mentioned drawbacks.

The object of the invention is achieved by the subject-matter as defined in claim 1.

The accompanying drawings illustrate one complete example of the physical embodiment of the invention constructed according to the best mode so far devised for the practical application of the principles thereof, and in which:
- fig. 1: is a perspective view of the elastic yoke that is the object of the present invention;
- fig. 2: is a perspective view of the yoke mounted on a motorcar seat adjusting device; and
- fig. 3: is an enlarged partial cross section of the yoke in fig. 2.

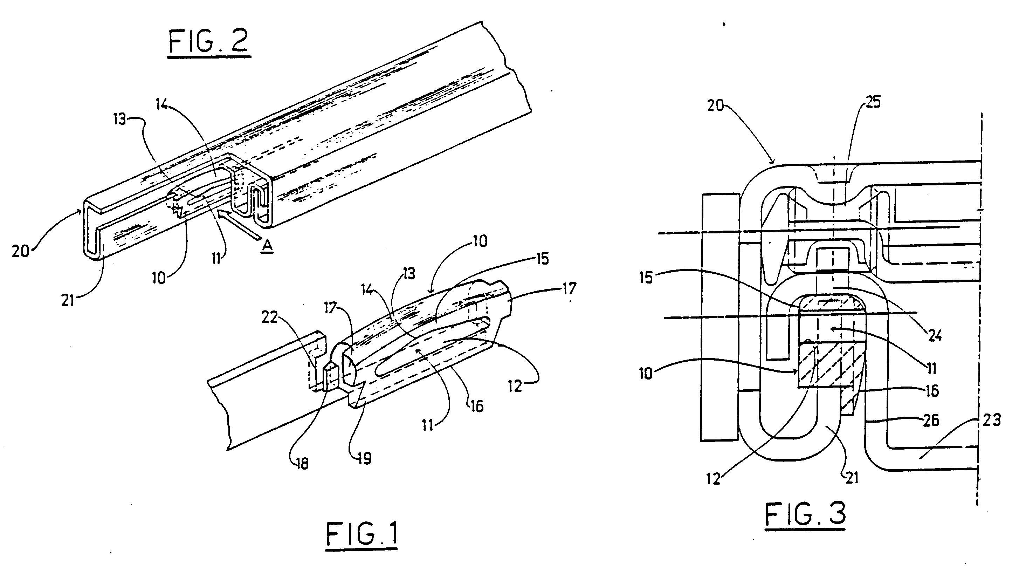

Referring to fig. 1, a yoke 10 consists of a single piece having an elongated shape and preferably made of an elastomeric material or plastic. A longitudinal opening 11, obtained in the yoke 10 is defined by a flat lower surface 12 and by an arched upper surface 13.

The upper ridge 14 of the yoke 10 is also arched, so that an arched upper portion 15 and a flat lower portion or base 16 can be distinguished in the yoke.

Two projections or supporting members 17 are longitudinally located at the upper ends of the yoke 10 on one of its sides. On the opposite side, each end of the yoke is provided with a tongue 18 for the spring-mounting of the yoke.

The base 16 carries a downwardly projecting longitudinal lip 19 on the same side of the yoke on which the supporting members 17 are located.

Referring to Fig. 2, the yoke 10 is spring-mounted on a vertical folding 21 of the movable slide rail 20, in correspondence of a suitable rectangular cut 22 obtained on the edge of the folding 21. The yoke 10 is pressed against the folding 21 in the direction indicated by the arrow A. The tongues 18 have got to be pushed beyond the folding 21, with the lip 19 and the supporting members 17 abutting said folding.

Once in position, the ridge 14 of the yoke 10 forms a rise in the superior edge of the folding 21. As from Figs. 2 and 3, during operation the upper ridge 14 of the yoke 10 contacts the horizontal portion 24 of the fixed guide 23, preventing the two guides from contacting each other directly.

The arched portion 15 is the elastic portion of the yoke. It works like a leaf spring, as it gets slightly compressed when the movable slide rail 20 is inserted along the fixed slide rail 23. In doing so, the yoke recovers the vertical clearance between the slide rails. This device ensures a permanent and correct distance between the movable and the fixed slide rails. It also maintains the contact between the fixed slide rail and the revolving means of the movable slide rail, that in this case consist of rollers 25.

As from Fig. 3, the yoke 10 has a transversal thickness that is greater than that of the vertical folding 21 on which the yoke is mounted. This impedes the direct contact between the slide rails also transversally, cutting down the friction due to the sliding of the side walls. In the case of Fig. 3, said sliding occurs between the side surface 16 of the yoke and the surface 26 of the fixed slide rail 23.

The yoke that is the object of the present invention can be advantageously realized with an elastic material such as a resin with self-lubricating characteristics so as to minimize the friction between the guides. Moreover, a correct operation is ensured by fitting at least four yokes on each slide rail.

## Claims

1. An elastic spacer yoke (10) between a fixed slide rail (23) and a movable slide rail (20) for use in a motorcar seat, the slide rails (23, 20) allowing adjustment of the longitudinal position of the seat, the spacer yoke (10) consisting of a body with an elongated shape, preferably made of semi-rigid material, characterized in that the spacer yoke (10) is provided with an arched ridge (14) and a longitudinally disposed elongated central opening (11) defining an elongated arched portion (15) and an elongated flat base portion (16) of the spacer yoke (10), the spacer yoke (10) being further provided with longitudinally projecting members (17, 18, 19) supporting and blocking the spacer yoke (10) in one of the slide rails (20).

2. A yoke according to claim 1 characterized in that it is spring-mounted onto the movable slide rail (20), in a suitable cut (22) obtained in said slide rail (20).

3. A yoke according to claims 1 and 2 characterized in that it projects laterally from the portion of the slide rail (20) on which it is mounted.

4. A yoke according to claim 1 characterized in that it is made of self-lubricating resin.

## Patentansprüche

1. Ein elastisches Abstandsteil (10) zwischen einer festen Gleitschiene (23) und einer bewegbaren Gleitschiene (20) zur Verwendung in einem Kraftfahrzeugsitz, wobei die Gleitschienen (23, 20) eine Einstellung der Längsposition des Sitzes erlauben und das Abstandsteil (10) aus einem länglich geformten Körper besteht, welcher vorzugsweise aus halbstarrem Material gefertigt ist,
dadurch gekennzeichnet,
daß das Abstandsteil (10) mit einem gewölbten Steg (14) und einer längs angeordneten länglichen zentralen Öffnung (11) ausgestattet ist, wodurch ein länglicher gewölbter Bereich (15) und ein länglicher flacher Grundbereich (16) des Abstandsteils (10) definiert wird, und daß das Abstandsteil (10) darüberhinaus mit längs hervorragenden Gliedern (17, 18, 19) ausgestattet ist, die das Abstandsteil (10) in einer der Gleitschienen (20) stützen und blockieren.

2. Ein Abstandsteil gemäß Anspruch 1,
dadurch gekennzeichnet,
daß es mit Federn auf der bewegbaren Gleitschiene (20) montiert ist, und zwar in einem geeigneten Schlitz (22) in dieser Gleitschiene (20).

3. Ein Abstandsteil gemäß Ansprüchen 1 und 2,
dadurch gekennzeichnet,
daß es seitlich von dem Bereich der Gleitschiene (20), auf dem es montiert ist, hervorragt.

4. Ein Abstandsteil gemäß Anspruch 1,
dadurch gekennzeichnet,
daß es aus selbstschmierendem Harz gefertigt ist.

## Revendications

1. Pièce élastique d'écartement entre un rail de coulissement fixe (23) et un rail de coulissement mobile (20) pour un siège de véhicule automobile, les rails de coulissement (23,20) permettant un réglage de la position longitudinale du siège, la pièce d'écartement (10) étant constituée d'un corps de forme allongée, de préférence en matériau semi-rigide, caractérisée en ce que la pièce d'écartement (10) présente une arête incurvée (14) et une ouverture centrale allongée (11) disposée longitudinalement, définissant une portion incurvée allongée (15) et une portion de base plate allongée de la pièce d'écartement (10), ladite pièce d'écartement (10) étant de plus pourvue de protubérances (17,18,19) s'étendant longitudinalement en saillie, et servant à supporter et à bloquer la pièce d'écartement (10) dans l'un des rails de coulissement (20).

2. Pièce selon la revendication 1, caractérisée en ce qu'elle est montée élastiquement sur le rail de coulissement mobile (20) dans une découpe adaptée (22) ménagée dans ledit rail de coulissement (20).

3. Pièce selon les revendications 1 et 2, caractérisée en ce qu'elle s'étend latéralement en saillie par rapport à la portion du rail de coulissement (20) sur lequel elle est montée.

4. Pièce selon la revendication 1, caractérisée en ce qu'elle est réalisée en une résine autolubrifiante.
